# EUROPÄISCHE PATENTSCHRIFT

(11) **EP 1 511 157 B1**
(45) Veröffentlichungstag und Bekanntmachung des Hinweises auf die Patenterteilung: **09.04.2014**
(21) Anmeldenummer: 04017105.0
(22) Anmeldetag: 20.07.2004
(51) Int. Cl.: H02K 11/00

(54) **Elektromotor**
Electric motor
Moteur électrique

(30) Priorität: 29.08.2003 DE 10340325
(43) Veröffentlichungstag der Anmeldung: 02.03.2005
(73) Patentinhaber: SEW-Eurodrive GmbH & Co, D-76646 Bruchsal (DE)
(72) Erfinder: Mahlein, Jochen Dr., 76139 Karlsruhe (DE); Schmidt, Josef, 76676 Graben-Neudorf (DE); Enenkel, Ronny, 76149 Karlsruhe (DE); Simon, Olaf, 76646 Bruchsal (DE)
(74) Vertreter: Tüngler, Eberhard

(56) Entgegenhaltungen:
- EP-A- 1 156 496
- FR-A- 2 745 444
- US-A- 4 803 376
- US-A1- 2002 158 523
- PATENT ABSTRACTS OF JAPAN Bd. 1997, Nr. 02, 28. Februar 1997 (1997-02-28) -& JP 08 275483 A (HITACHI LTD), 18. Oktober 1996 (1996-10-18)
- PATENT ABSTRACTS OF JAPAN Bd. 011, Nr. 301 (M-628), 30. September 1987 (1987-09-30) -& JP 62 091697 A (AKAISHI KINZOKU KOGYO KK), 27. April 1987 (1987-04-27)
- PATENT ABSTRACTS OF JAPAN Bd. 006, Nr. 002 (P-096), 8. Januar 1982 (1982-01-08) -& JP 56 129864 A (MATSUSHITA ELECTRIC IND CO LTD), 12. Oktober 1981 (1981-10-12)

## Beschreibung

Die Erfindung betrifft einen Asynchronmotor.

Aus der DE 199 24 201 C2 ist ein Drehzahlgebersystem bekannt, das besonders einfach und kostengünstig aufgebaut ist. Dabei werden die Flügel eines Lüfterrads eines Motors von Sensoren detektiert. Vorteiligerweise ist die generierte Datenrate derart gering, dass ein kostengünstiges Bussystem zum Übertragen der Daten verwendbar ist. Nachteilig ist dabei, dass die Winkel-Auflösung von der Anzahl der Lüfter abhängt und dadurch auch begrenzt ist. Außerdem benötigen die Sensoren viel Bauraum außerhalb des Motors.

Aus US 2002/0158523 A1 ist eine mehrphasige elektrische Maschine bekannt, bei welcher ein Lüfterrad mit einem Rotorkörper durch Nieten verbunden ist.

Dabei weist die Maschine zumindest ein Statorgehäuse, einen Rotor und ein Lüfterrad auf,
wobei das Statorgehäuse einen B-Lagerflansch umfasst, insbesondere zur Aufnahme eines B-seitigen Lagers des Rotors,
wobei das Lüfterrad mit dem Rotor verbunden ist, insbesondere also mit dem Rotor mitdreht,
und ein Ring an einer dem B-Lagerflansch zugewandten Seite des Lüfterrads mit dem Lüfterrad verbunden ist,
wobei mit dem Statorgehäuse eine Auswerteelektronik lösbar verbunden ist und Sensoren mit der Auswertelektronik derart verbunden und angeordnet sind, dass die Sensoren mit dem Ring derart zusammenwirken, dass von der Auswerteelektronik Informationen über die Winkellage und/oder Drehzahl des Rotors mittels einer Datenleitung übertragbar sind.

Aus JP 08-275483 A ist ein bürstenloser Motor bekannt, bei welchem ein Leistungstransistor auf einer Steuerleiterplatte angeordnet ist, wobei die Steuerleiterplatte zwischen einem Lüfterrad und einem B-Lagerschild angeordnet ist.

Aus JP 62091697 A ist eine Lüfteranordnung bekannt, bei welcher Lüfterflügel in einem separaten Gehäuse rotierbar angeordnet sind, wobei ein die Lüfterflügel antreibender Motor außerhalb des Gehäuses angeordnet ist.

Aus FR 2 745 444 A1 eine elektrische Maschine eines Fahrzeugs bekannt, die sowohl als Generator als auch als Motor betreibbar ist.

Aus US 4 803 376 A ist ein Steuerungsverfahren für einen umkehrbaren Motor-Generator eines Fahrzeugs bekannt, wobei ein Datenbus Leitungen zu Hall-Sensoren und Steuerventilen umfasst.

Aus EP 1 156 496 A1 ist die Verwendung eines harzgeklebten Magneten bekannt, welcher ein Ferritpulver und ein thermoplastisches Harz umfasst.

Der Erfindung liegt daher die Aufgabe zugrunde, einen Motor weiterzubilden, der ein robustes und kostengünstiges Gebersystem aufweisen soll.

Erfindungsgemäß wird die Aufgabe bei dem Elektromotor nach den in Anspruch 1 angegebenen Merkmalen gelöst.

Wesentliche Merkmale der Erfindung bei dem Elektromotor sind in Anspruch 1 angegeben. Insbesondere wird somit vorgeschlagen, dass der Asynchronmotor zumindest ein Statorgehäuse, einen Rotor und ein Lüfterrad umfasst,
wobei das Statorgehäuse einen B-Lagerflansch umfasst, insbesondere zur Aufnahme eines B-seitigen Lagers des Rotors,
wobei das Lüfterrad mit dem Rotor verbunden ist, insbesondere also mit dem Rotor mitdreht und ein Ring an einer dem B-Lagerflansch zugewandten Seite des Lüfterrads mit dem Lüfterrad verbunden ist,
wobei mit dem Statorgehäuse eine Auswerteelektronik lösbar verbunden ist und Sensoren mit der Auswertelektronik derart verbunden und angeordnet sind, dass die Sensoren mit dem Ring derart zusammenwirken, dass von der Auswerteelektronik Informationen über die Winkellage des Rotors mittels einer Datenleitung übertragbar sind, wobei der Ring (11) im Lüfterrad (7) integriert ausgeführt ist und das Lüfterrad (7) aus einem Kunststoff mit magnetisierbaren Partikeln hergestellt ist, wobei das Lüfterrad (7) am Umfang abwechselnd verschieden aufmagnetisiert ist, wobei dieses Magnetisieren auf ungefähr demjenigen Radius erfolgt, auf welchem die Sensoren angeordnet sind.

Von Vorteil ist dabei, dass die Auflösung nicht von der Anzahl der Flügel des Lüfterrades abhängig ist sondern beliebig wählbar ist. Außerdem ist das benötigten Bauvolumen viel kleiner und sowohl die Sensoren als auch die Auswerteelektronik und der Ring sind geschützt innerhalb der Lüfterhaube vorsehbar.

Von Vorteil ist zweiter, dass die Auflösung des erfindungsgemäßen Gebers mittels der Wahl der magnetisierten Bereiche festlegbar ist. Beispielsweise sind 12 oder sogar 50 oder mehr Bereiche ausbildbar. Somit wird durch die Erfindung eine Auflösung von 30° oder sogar 7,2° oder weniger zur Verfügung gestellt. Dies ist für eine einfache industrielle Positionieraufgabe ausreichend. Somit ist sogar ein Asynchronmotor als Elektromotor zum Positionieren verwendbar, also in einem Positionierantrieb einsetzbar.

Die Sensoren sind als Hallsensoren, als Wieganddrähte, als Impulsdrähte oder als andere, Magnetfeld-sensitive Sensoren ausgeführt. Von Vorteil ist dabei, dass die Sensoren unempfindlich gegen Verschmutzung und/oder Feuchtigkeit und temperaturkompensiert vorsehbar sind. Vorteiligerweise sind bei den Wiegand- oder Impulsdrähten Spannungsversorgungen verzichtbar.

Bei einer vorteilhaften Ausgestaltung verläuft ist die Datenleitung zumindest teilweise in einem Hybridkabel oder ist durch Aufmodulation auf Starkstromkabel bewirkbar. Von Vorteil ist dabei, dass kein spezielles Kabel verlegt werden muss, sondern die Starkstromkabel, die sowieso verlegt werden müssen, entweder in modifizierter Form als Hybridkabel oder in üblicher Form mit Augmodulationsvorrichtungen versehen werden. Insgesamt ist dies einfach und kostengünstig und kompakt ausführbar. Außerdem ist die Verdrahtung einfach und robust ausführbar.

Bei einer vorteilhaften Ausgestaltung verarbeitet die Auswerteelektronik die Signale der Sensoren derart, dass über die Datenleitung Daten in einem Busformat, wie Feldbus oder dergleichen, übertragbar sind. Von Vorteil ist dabei, dass nicht die Signale der Sensoren in Echtzeit übertragen werden müssen sondern die Information über den Winkel in digitalisierter Form als Daten in Feldbusformat übertragbar sind.

Bei einer vorteilhaften Ausgestaltung führt die Datenleitung zu einem Stromrichter, Umrichter und/oder einer elektronischen Schaltung. Von Vorteil ist dabei, dass Stromrichter, Umrichter und/oder einer elektronischen Schaltung zur Steuerung und/oder Regelung die Daten über die Winkellage des Rotors verwenden können und die Berechnungen dadurch stützen können. Insbesondere ist die Steuerung und Regelung als Positioniersteuerung ausbildbar. Dabei ist der Motor sogar als Asynchronmotor, insbesondere in Verbindung mit einer elektrischen Arbeitsbremse, verwendbar.

Bei einer vorteilhaften Ausgestaltung ist am Elektromotor ein Umrichter und/oder ein Stromrichter vorgesehen. Von Vorteil ist dabei, dass ein solcher integrierter Stromrichter- oder Umrichtermotor zur Bildung eines kompakten robusten Positionierantriebs vorsehbar ist.

### Bezugszeichenliste

- 1: Statorgehäuse
- 2: Rotor
- 3: Lager
- 4: Klemmenkasten
- 5: Lüfterhaube
- 6: Stromrichter mit Kühlvorrichtung
- 7: Lüfterrad mit Flügeln
- 8: Auswerteelektronik
- 9: Elektronikgehäuse
- 10: Datenleitung
- 11: Ring
- 12: Bremse

### Die Erfindung wird nun anhand von Abbildungen näher erläutert:

In der Figur 1 ist ein Elektromotor in Schnittansicht schematisch gezeichnet, der zur Erläuterung des technischen Hintergrunds dient.

In der Figur 2 ist ein Elektromotor mit Bremse, also ein Bremsmotor, in Schnittansicht schematisch gezeichnet zur Erläuterung des technischen Hintergrunds.

Figur 3 zeigt das Ausführungsbeispiel nach Figur 1 genauer.

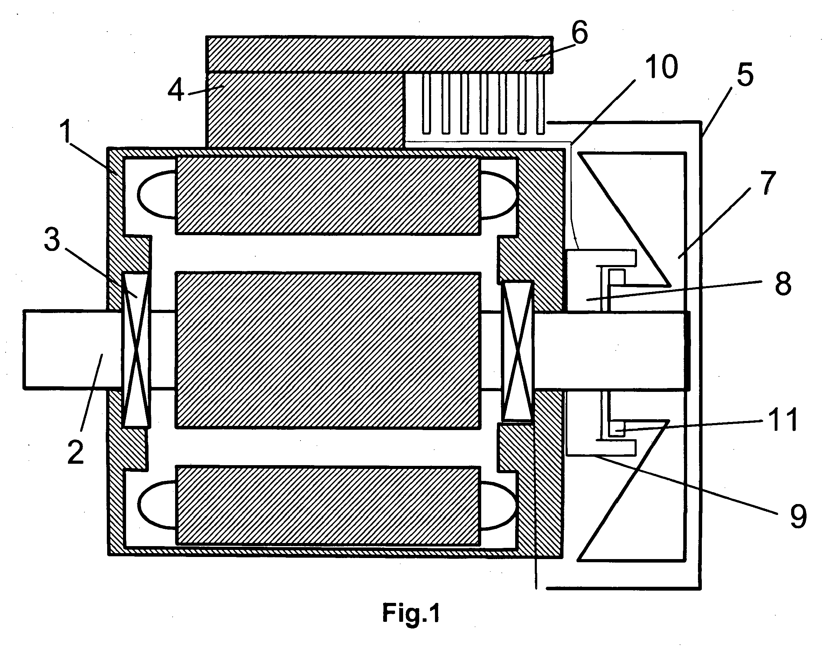

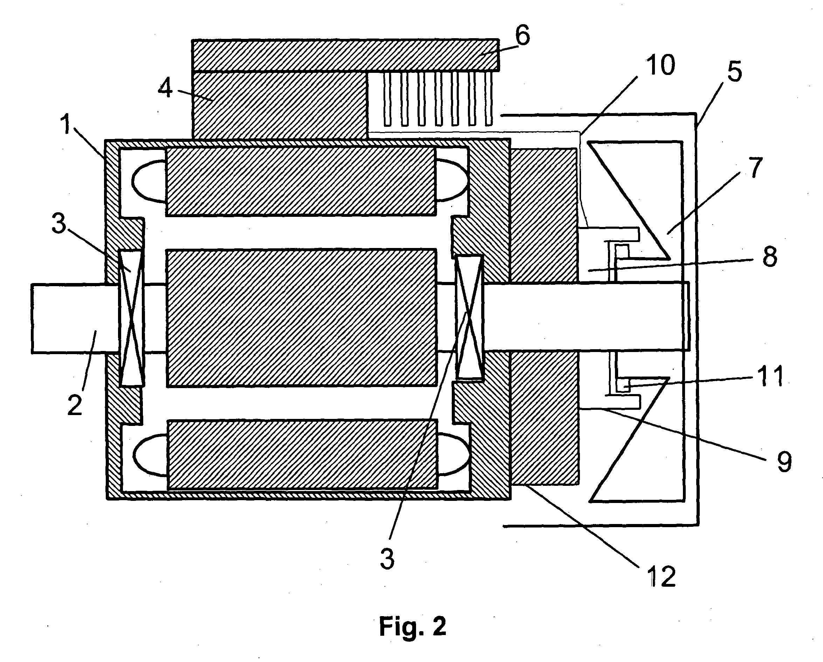

Der Elektromotor umfasst ein Statorgehäuse 1 und einen relativ zu diesem drehbar über zwei Lager 3 gelagerten Rotor 2. Am Statorgehäuse 1 ist ein Klemmenkasten 4 für Anschlussvorrichtungen angebracht, auf dem ein Stromrichter 6 mit Kühlvorrichtung montiert ist. Somit ist der Elektromotor auch als Umrichtermotor ausführbar. Dabei ist zwischen Statorwicklungen und der Elektronik des Stromrichters oder Umrichters zumindest eine Wärmesperre vorgesehen. Die Abfuhr der von den Leistungshalbleitern des Stromrichters oder Umrichters erzeugten Wärme erfolgt im Wesentlichen über den Kühlkörper, dessen Kühlrippen in den Figuren 1 und 2 zum Motor hin gerichtet sind. In weiteren Ausführungsbeispielen sind zusätzlich oder alternativ vom Motor weg gerichtete Kühlrippen vorsehbar. Darüber hinaus bezieht sich die Erfindung auch auf reine Elektromotoren ohne Stromrichter oder Umrichter, wobei dieser Stromrichter oder Umrichter im Feld oder in einem Schaltschrank montierbar ist und zumindest mit elektrischen Versorgungsleitungen mit dem Elektromotor verbunden ist.

Der Rotor 2 ist mit einem Lüfterrad 7 mit Flügeln lösbar verbunden, das in einem von der Lüfterhaube 5 geschützten Bereich drehbar ist. Insbesondere ist das Lüfterrad mittels Passfederverbindung mit der Rotorwelle des Rotors 2 verbunden

Am B-Lagerflansch des Statorgehäuses 1, insbesondere an der dem Abtrieb abgewandten Seite, also B-seitig, ist eine Auswerteelektronik 8 lösbar mit dem B-Lagerflansch verbunden, die Sensoren umfasst. Am Lüfterrad 7 ist ein Polring, also ein Ring 11 mit am Umfang abwechselnder Magnetisierungsrichtung, angebracht. Die Sensoren detektieren das Magnetfeld des relativ zu ihnen drehbaren Rings und sind am Umfang zueinander versetzt angebracht, wodurch eine Drehrichtungserkennung realisierbar ist. Wenn der Polring beispielsweise aus 12 Bereichen besteht, von denen 6 Bereiche mit ihrem magnetischen Nordpol zu den Sensoren hingewandt und 6 Bereiche mit ihrem magnetischen Südpol zu den Sensoren hingewandt sind, werden die Sensoren am Umfang des Polrings vorteiligerweise um 15 ° versetzt angeordnet.

Bei einem erfindungsgemäßen Ausführungsbeispiel ist die Auswerteelektronik von einem diese umgebenden Elektronikgehäuse 9 geschützt. Alternativ ist auch ein Schutz durch Umspritzen oder Vergießen mit einem Kunststoff erreichbar.

Die Auswerteelektronik ist mit einer Datenleitung 10 verbunden, die zum Stromrichter führt und diesem Informationen über den Winkel des Lüfterrades zuleitet. Zumindest bei denjenigen Ausführungsbeispielen, bei welchen der Stromrichter oder Umrichter separat vom Motor, also im Feld oder Schaltschrank, montiert ist, ist die Datenleitung auch mit den Versorgungsleitungen integriert ausführbar. Dazu ist in einer erster Variante die Verwendung eines Hybridkabels ausführbar, das Starkstromleitungen zur Versorgung des Motors und Signalleitungen zur Datenübertragung und/oder zur Übertragung von Steuersignalen umfasst. In einer zweiten Variante ist eine Aufmodulation der zu übertragenden Daten auf die Versorgungsleitungen selbst ausführbar.

Bei dem Ausführungsbeispiel nach Figur 1 ist die Auswertelektronik samt Sensoren und Ring somit kompakt ausgeführt, von der Lüfterhaube geschützt und in der Auflösung unabhängig von der Anzahl der Lüfterflügel des Lüfterrades 7. Je nach Anforderung ist der Ring derart ausführbar, dass nicht nur 12 sondern 50 oder mehr Pulse pro Umdrehung vorsehbar sind.

In der Figur 2 ist eine entsprechende Ausführung mit Bremse 12 gezeigt, wobei die Auswertelektronik nicht zwischen B-Lagerflansch des Statorgehäuses 1 und Lüfterrad 7 sondern zwischen Bremse 12 und Lüfterrad 7 angeordnet ist.

Somit ist die Auswertelektronik bei einem Baukasten von Elektromotoren einsetzbar, der Elektromotoren und Elektromotoren mit Bremse umfasst sowie Umrichtermotoren und Umrichtermotoren mit Bremse. Dabei sind Umrichtermotoren Elektromotoren mit integriertem Umrichter wie in den Figuren 1 und 2 schematisch dargestellt.

Der Ring ist derart ausgeführt, dass er bei mindestens zwei Baugrößen der Baureihe, also bei mindestens zwei verschiedenen Leistungsklassen von Elektromotoren, verwendbar ist.

Dazu ist das Lüfterrad bei beiden Baugrößen verschieden groß ausgeführt, aber mit derselben Aufnahme für den Ring. Es kann also der immer gleiche Ring bei mindestens zwei verschieden großen Lüfterrädern der Baureihe verwendet werden. Somit ist die Anzahl der Teile in der Baureihe insgesamt klein gehalten und der Lagerplatz sowie die Kosten sind verringert.

Bei weiteren Ausführungsbeispielen ist der Ring mit Befestigungsklipsen mit dem Lüfterrad verbunden.

Bei weiteren Ausführungsbeispielen ist das Lüfterrad aus Kunststoff und der Ring aus Ferrit oder einem Ferritplast. Bei letzterer Variante ist der Ring aus einem Kunststoff hergestellt, in den Ferritpartikel vor dem Spritzvorgang eingemischt wurden.

In Abweichung zu den Figuren 1 bis 3 ist erfindungsgemäß vorgesehen daß das Lüfterrad aus einem Kunststoff mit magnetisierbaren Partikeln hergestellt. Somit ist der Ring sozusagen im Lüfterrad integriert ausführbar. Das Lüfterrad wird dann am Umfang abwechselnd verschieden aufmagnetisiert, wobei dieses Magnetisieren auf ungefähr demjenigen Radius erfolgt, auf welchem die Sensoren angeordnet sind.

Bei weiteren Ausführungsbeispielen ist der Ring nicht aus abwechselnd magnetisierbarem Material, wie Ferromagnet, Ferrimagnet und/oder Permanentmagneten, vorgesehen sondern es ist ein Material vorgesehen, bei dem ein physikalischer Parameter, wie beispielsweise elektrische Leitfähigkeit oder Dielektrizitätskonstante oder eine elektrische oder magnetische Suzeptibilität, am Umfang des Rings variierend ausgeprägt ist. Die Sensoren sind dann entsprechend zu wählen. Das Variieren des physikalischen Parameters ist vorzugsweise periodisch derart auszuführen, dass jedem benachbarten Winkelbereich ein geänderter Wert des Parameters zugeordnet ist und somit mittels der Sensoren beim Drehen des Rotors das Abwechseln der Winkelbereiche detektierbar ist und somit Information über die Winkellage und/oder Winkelgeschwindigkeit bestimmbar ist. Beispielsweise ist der Ring aus am Umfang abwechselnd angeordneten Stücken von Metall und Kunststoff herstellbar. Somit sind als Sensoren Feldplattensensoren oder andere, auf die elektrische Leitfähigkeit sensitive Sensoren verwendbar.

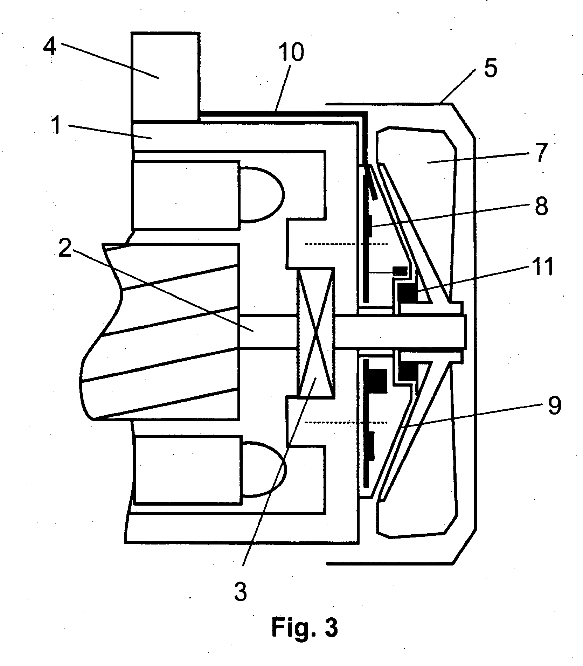

Figur 3 zeigt ein Ausführungsbeispiel nochmals genauer. Dabei ist der Ring aufgeschoben auf eine Erhebung am Lüfterrad und fixierbar mit einem Klebepunkt oder einer elastischen und hervorstehenden Kunststoffnase am Lüfterrad. Der Ring hat dazu ein gewisses Übermaß. Das Gehäuse 9 ist an den B-Lagerflansch angeschraubt ausgeführt. Es ist aber auch bei anderen erfindungsgemäßen Ausführungsbeispielen mit Kleben oder Nieten verbindbar.

## Patentansprüche

1. Asynchronmotor, umfassend zumindest ein Statorgehäuse (1), einen Rotor (1) und ein Lüfterrad (7),
wobei das Statorgehäuse (1) einen B-Lagerflansch umfasst, insbesondere zur Aufnahme eines B-seitigen Lagers des Rotors,
wobei das Lüfterrad (7) mit dem Rotor (1) verbunden ist, insbesondere also mit dem Rotor (1) mitdreht,
**und** ein Ring (11) **an einer dem B-Lagerflansch zugewandten Seite des Lüfterrads (7)** mit dem Lüfterrad (7) verbunden ist,
wobei mit dem Statorgehäuse (1) eine Auswerteelektronik (8) lösbar verbunden ist und Sensoren mit der Auswertelektronik (8) derart verbunden und angeordnet sind, dass die Sensoren mit dem Ring (11) derart zusammenwirken, dass von der Auswerteelektronik (8) Informationen über die Winkellage und/oder Drehzahl des Rotors (1) mittels einer Datenleitung (10) übertragbar sind,
wobei der Ring (11) im Lüfterrad (7) integriert ausgeführt ist und das Lüfterrad (7) aus einem Kunststoff mit magnetisierbaren Partikeln hergestellt ist, wobei das Lüfterrad (7) am Umfang abwechselnd verschieden aufmagnetisiert ist, wobei dieses Magnetisieren auf ungefähr demjenigen Radius erfolgt, auf welchem die Sensoren angeordnet sind.

2. Asynchronmotor nach mindestens einem der vorangegangenen Ansprüche,
**dadurch gekennzeichnet, dass**
die Sensoren als Hallsensoren, als Wiegand- oder Impulsdrähte oder als andere, Magnetfeld-sensitive Sensoren ausgeführt sind.

3. Asynchronmotor nach mindestens einem der vorangegangenen Ansprüche,
**dadurch gekennzeichnet, dass**
die Datenleitung (10) zumindest teilweise in einem Hybridkabel verläuft oder durch Aufmodulation auf Starkstromkabel bewirkbar ist.

4. Asynchronmotor nach mindestens einem der vorangegangenen Ansprüche,
**dadurch gekennzeichnet, dass**
die Auswerteelektronik die Signale der Sensoren derart verarbeitet, dass über die Datenleitung (10) Daten in einem Busformat, wie Feldbus oder dergleichen, übertragbar sind.

5. Asynchronmotor nach mindestens einem der vorangegangenen Ansprüche,
**dadurch gekennzeichnet, dass**
die Datenleitung (10) zu einem Stromrichter, Umrichter und/oder einer elektronischen Schaltung führt.

6. Asynchronmotor nach mindestens einem der vorangegangenen Ansprüche,
**dadurch gekennzeichnet, dass**
der Motor von einem Positionierantrieb umfasst ist, insbesondere also der Motor zum Positionieren eines Gegenstandes verwendbar ist.

7. Asynchronmotor nach mindestens einem der vorangegangenen Ansprüche,
**dadurch gekennzeichnet, dass**
am Elektromotor ein Umrichter und/oder ein Stromrichter vorgesehen ist.

## Claims

1. Asynchronous motor, comprising at least a stator housing (1), a rotor (2) and a fan wheel (7),
wherein the stator housing (1) comprises a B-bearing flange, in particular for receiving a B-side bearing of the rotor,
wherein the fan wheel (7) is connected to the rotor (2), in particular therefore rotates with the rotor (2),
and a ring (11) is connected to the fan wheel (7) on a side of the fan wheel (7) facing the B-bearing flange,
wherein evaluation electronics (8) are detachably connected to the stator housing (1) and sensors are connected to the evaluation electronics (8) and arranged in such a way that the sensors cooperate with the ring (11) in such a way that information about the angular position and/or rotational speed of the rotor (2) is transmittable by the evaluation electronics (8) by means of a data line (10),
wherein the ring (11) is formed in a manner integrated in the fan wheel (7) and the fan wheel (7) is produced from a plastic having magnetizable particles, the fan wheel (7) being magnetized alternately differently at the periphery, this magnetizing being carried out on approximately the radius on which the sensors are arranged.

2. Asynchronous motor according to at least one of the preceding claims,
**characterized in that**
the sensors are formed as Hall sensors, as Wiegand or pulse wires or as other magnetic field-sensitive sensors.

3. Asynchronous motor according to at least one of the preceding claims,
**characterized in that**
the data line (10) runs at least partially in a hybrid cable or is able to be brought about by modulation on power cables.

4. Asynchronous motor according to at least one of the preceding claims,
**characterized in that**
the evaluation electronics process the signals of the sensors in such a way that data is transmittable in a bus format, such as fieldbus or the like, via the data line (10).

5. Asynchronous motor according to at least one of the preceding claims,
**characterized in that**
the data line (10) leads to a power converter, a converter and/or an electronic circuit.

6. Asynchronous motor according to at least one of the preceding claims,
**characterized in that**
the motor is comprised by a positioning drive, in particular therefore the motor is usable for positioning an object.

7. Asynchronous motor according to at least one of the preceding claims,
**characterized in that**
a converter and/or a power converter is provided on the electric motor.

## Revendications

1. Moteur asynchrone comprenant au moins un carter statorique (1), un rotor (2) et une roue de ventilateur (7),
ledit carter statorique (1) comportant une bride de montage côté B, notamment conçue pour recevoir un palier du rotor situé côté B,
ladite roue de ventilateur (7) étant reliée au rotor (2) de sorte qu'elle tourne, en particulier, conjointement audit rotor (2),
et un anneau (11) étant relié à la roue de ventilateur (7) sur une face de ladite roue de ventilateur (7) qui est tournée vers ladite bride de montage côté B,
une unité électronique d'évaluation (8) étant raccordée amoviblement audit carter statorique (1), et des capteurs étant connectés à ladite unité électronique d'évaluation (8) et étant agencés de façon telle que lesdits capteurs coopèrent avec ledit anneau (11) de telle sorte que des informations, relatives à la position angulaire et/ou à la vitesse de rotation du rotor (2), puissent être transmises par ladite unité électronique d'évaluation (8) au moyen d'une ligne de données (10),
ledit anneau (11) étant réalisé avec intégration dans la roue de ventilateur (7), ladite roue de ventilateur (7) étant fabriquée en une matière plastique à particules magnétisables, le pourtour de ladite roue de ventilateur (7) présentant en alternance une magnétisation différente, cette magnétisation étant effectuée approximativement sur le rayon sur lequel les capteurs sont disposés.

2. Moteur asynchrone selon au moins l'une des revendications précédentes,
**caractérisé par le fait que**
les capteurs sont réalisés sous la forme de capteurs à effet Hall, de fils à effet Wiegand ou de fils d'impulsion, voire d'autres capteurs sensibles à un champ magnétique.

3. Moteur asynchrone selon au moins l'une des revendications précédentes,
**caractérisé par le fait que**
la ligne de données (10) s'étend au moins partiellement dans un câble hybride, ou peut être activée par modulation sur des câbles de puissance.

4. Moteur asynchrone selon au moins l'une des revendications précédentes,
**caractérisé par le fait que**
l'unité électronique d'évaluation traite les signaux des capteurs de façon telle que des données puissent être transmises, par l'intermédiaire de la ligne de données (10), sous un format bus tel qu'un bus de terrain, ou de type similaire.

5. Moteur asynchrone selon au moins l'une des revendications précédentes,
**caractérisé par le fait que**
la ligne de données (10) mène à un convertisseur de courant, à un onduleur et/ou à un circuit électronique.

6. Moteur asynchrone selon au moins l'une des revendications précédentes,
**caractérisé par le fait que**
ledit moteur est englobé dans un entraînement de positionnement, c'est-à-dire que ledit moteur peut notamment être utilisé pour le positionnement d'un objet.

7. Moteur asynchrone selon au moins l'une des revendications précédentes,
**caractérisé par le fait**
**qu'**un onduleur et/ou un convertisseur de courant est (sont) prévu(s) sur le moteur électrique.
